# FASCICULE DE BREVET EUROPEEN

(11) **EP 2 904 890 B1**
(45) Date de publication et mention de la délivrance du brevet: **21.10.2020**
(21) Numéro de dépôt: 15154272.7
(22) Date de dépôt: 09.02.2015
(51) Int. Cl.: A01C 5/06

(54) **ROUE FORMANT OUTIL AGRICOLE AMÉLIORÉ**
RAD, DAS EIN VERBESSERTES LANDWIRTSCHAFTLICHES GERÄT BILDET
WHEEL FORMING AN IMPROVED AGRICULTURAL TOOL

(30) Priorité: 10.02.2014 FR 1451001
(43) Date de publication de la demande: 12.08.2015
(73) Titulaire: OTICO, 77650 Chalmaison (FR)
(72) Inventeur: Phely, Olivier, 77520 Thenisy (FR); Piou, Denis, 89340 Villeblevin (FR)
(74) Mandataire: Cabinet Netter

(56) Documents cités:
- US-A- 921 557
- US-A- 5 533 793
- US-A1- 2010 107 946
- US-B1- 6 295 939

## Description

L'invention concerne les outils agricoles, et plus particulièrement ceux comprenant principalement une ou plusieurs roues.

Dans les outils de ce type, la ou les roues sont généralement utilisées pour travailler le sol. Les roues peuvent opérer seules, ou en coopération avec d'autres parties de l'outil.

Dans le cas d'un semoir par exemple, l'outil comprend une partie agencée pour ouvrir un sillon dans le sol, typiquement un soc, un disque ou une dent, et une ou plusieurs roues pour fermer le sillon et/ou pour tasser la terre, après que les semences ont été déposées au fond du sillon.

Certains outils, comme le semoir précité, comprennent également des roues dites "de jauge", lesquelles règlent la profondeur de travail du reste de l'outil. Dans le cas d'un outil comportant un soc par exemple, on monte des roues de jauge solidairement au soc, de sorte qu'en roulant sur le sol, les roues maintiennent la partie active du soc à une profondeur sensiblement constante.

Le plus souvent, les roues qui équipent les outils agricoles sont destinées à rouler sur le sol. Elles comprennent alors un pneumatique monté autour d'une partie de la roue qui forme le corps de celle-ci.

Pour éviter que le pneumatique ne se désolidarise du corps de roue lors du travail, la partie du corps de roue qui forme la jante est conformée de manière particulière. Il en résulte des formes généralement complexes, qui compliquent la fabrication du corps de roue, et également le montage du pneumatique sur celui-ci.

C'est pourquoi, les roues comprennent souvent deux flasques similaires qui se montent l'un sur l'autre pour former le corps de la roue. Les flasques sont assemblés l'un à l'autre par l'intermédiaire de l'une de leurs faces principales, tout en enserrant le pneumatique.

Dans FR 2 933 903, la demanderesse a proposé une roue innovante, dont la forme du corps de roue évite au pneumatique de déjanter en service, y compris dans des conditions extrêmes. Le corps en question est formé par l'assemblage mutuel de deux flasques similaires, face contre face. US 5,553,793 décrit un autre exemple de roue.

Lorsqu'elles sont utilisées en tant qu'outils, les roues sont généralement soumises à des efforts importants en fonctionnement.

Dans certains cas, en particulier lorsqu'elle équipe un semoir, l'orientation de la roue dans la machine ne correspond pas à la direction d'avance de cette dernière : il arrive fréquemment que la roue soit inclinée de manière importante par rapport à la direction d'avance. En outre, la roue peut être inclinée par rapport à la verticale au sol. Il en résulte, en fonctionnement, des contraintes très importantes sur le corps de roue.

Pour assurer la rotation de la roue autour d'un essieu, les frottements entre le moyeu et l'essieu doivent être réduits, par exemple en logeant un palier dans le corps de roue. Or, la demanderesse a constaté que l'insertion du corps de roue autour d'un essieu et/ou l'insertion d'un palier dans le moyeu peut être difficile, voir devenir impossible, au cours de l'utilisation de la roue. Ce risque est d'autant plus important que l'ajustement du moyeu par rapport à l'essieu et/ou du palier par rapport au moyeu est particulièrement précis et les tolérances faibles. Ce risque s'aggrave quand les conditions de fonctionnement sont sévères et les contraintes subies élevées comme dans le cas du semoir décrit ci-avant.

La demanderesse s'est fixé comme objectif d'améliorer la situation.

Elle propose un outil de travail du type comprenant un premier flasque et un second flasque qui se montent l'un sur l'autre en formant un corps de roue. Le premier flasque comporte une partie centrale, une partie périphérique de forme générale annulaire et des bras reliant la partie centrale et la partie périphérique l'une à l'autre. Le second flasque est homologue du premier flasque. À l'état monté, le corps de roue présente une jante formée conjointement par la partie périphérique du premier flasque et la partie périphérique homologue du second flasque et un moyeu formé par la partie centrale du premier flasque. La partie centrale du second flasque reçoit le moyeu formé par la partie centrale du premier flasque.

Un tel outil présente une meilleure robustesse. Sa longévité est augmentée. Les interventions en maintenance pour échanger le palier de l'outil sont facilitées.

L'outil peut présenter les caractéristiques optionnelles suivantes, seules ou en combinaison les unes avec les autres :
- La partie centrale du premier flasque est configurée de manière à y maintenir un palier orienté coaxial avec un axe principal du corps de roue. Un palier peut ainsi être inséré dans l'outil avant que ce dernier ne soit fixé sur un essieu. Le palier peut comprendre par exemple un roulement standard. Le positionnement adéquat du palier peut être indépendant du second flasque.
- La partie centrale du premier flasque est configurée de manière à permettre un mouvement de translation selon un axe principal du corps de roue d'un palier logé dans la partie centrale du premier flasque. Le palier peut être inséré et extrait axialement dans la partie centrale, par exemple pour être changé en maintenance, sans que son alignement soit faussé.
- La partie centrale du premier flasque comprend une butée axiale configurée de manière à limiter un mouvement de translation selon un axe principal du corps de roue d'un palier logé dans la partie centrale du premier flasque. Le positionnement axial du palier peut alors être prédéfini par la butée. Un réglage fin reste néanmoins possible pour une application particulière, par exemple en interposant une rondelle.
- La partie centrale du second flasque forme butée axiale limitant un mouvement de translation selon un axe principal du corps de roue d'un palier logé dans la partie centrale du premier flasque. Le positionnement axial du palier peut alors être prédéfini par la butée. Un réglage fin reste néanmoins possible pour une application particulière, par exemple en interposant une rondelle. Lorsque chacun des deux flasques comprend une butée axiale, le palier est maintenu dans un espace axial prédéfini. En outre, le palier est mieux protégé de l'environnement extérieur.
- L'outil comprend en outre une pièce rapportée conformée de manière à être fixée au corps de roue en enfermant un palier logé dans la partie centrale du premier flasque. Le palier est maintenu dans un espace axial prédéfini. Il est mieux protégé de l'environnement extérieur. Le palier peut être libéré de son logement en démontant la pièce rapportée, par exemple pour être échangé en maintenance. Cette libération est possible quel que soit l'état, assemblé ou non, du second flasque avec le premier flasque.
- La partie centrale du second flasque comprend une bague reliant les unes avec les autres une extrémité de chacun des bras du second flasque, la bague s'ajustant autour du moyeu formé par la partie centrale du premier flasque au cours du montage du premier flasque et du second flasque l'un sur l'autre. Le centrage du second flasque autour du moyeu du premier flasque est alors amélioré. Le risque de désaxage des deux flasques l'un par rapport à l'autre est limité.
- Le premier flasque et le second flasque sont faits de deux matériaux différents. Ainsi, les propriétés mécaniques de chacun des matériaux sont mieux adaptées aux fonctions particulières de chacun des deux flasques.
- Le premier flasque est en un matériau plastique. Le premier flasque est alors léger et peu coûteux.
- Le second flasque est en métal. Le second flasque présente une bonne résistance mécanique, en particulier aux chocs. Le second flasque peut alors former bouclier de protection pour le premier flasque et pour les parties du corps de roue qu'il couvre. Ceci est particulièrement avantageux en cas de projection de cailloux en fonctionnement ou d'accumulation et de durcissement de terre dans des parties mobiles de l'outil.
- Le moyeu comprend en son centre un alésage traversant selon un axe principal du corps de roue. L'alésage comprend au moins deux portions sensiblement cylindriques de diamètres différents reliées par un épaulement annulaire. L'épaulement peut alors former butée axiale par coopération avec une surface correspondante d'un palier logé dans l'alésage.

D'autres caractéristiques, détails et avantages de l'invention apparaîtront à la lecture de la description détaillée ci-après, et des dessins annexés, sur lesquels :
- la figure 1 montre une vue éclatée et en perspective d'un outil selon l'invention,
- la figure 2 montre une vue en coupe de l'outil de la figure 1,
- la figure 3 montre une vue du détail III de la figure 2,
- la figure 4 montre une vue en perspective d'un outil selon l'invention dépourvu de pneumatique, et
- la figure 5 montre une vue de l'outil de la figure 4 depuis un autre point de vue,
- les figures 6A à 6D montrent une machine agricole sur laquelle sont montés deux outils selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

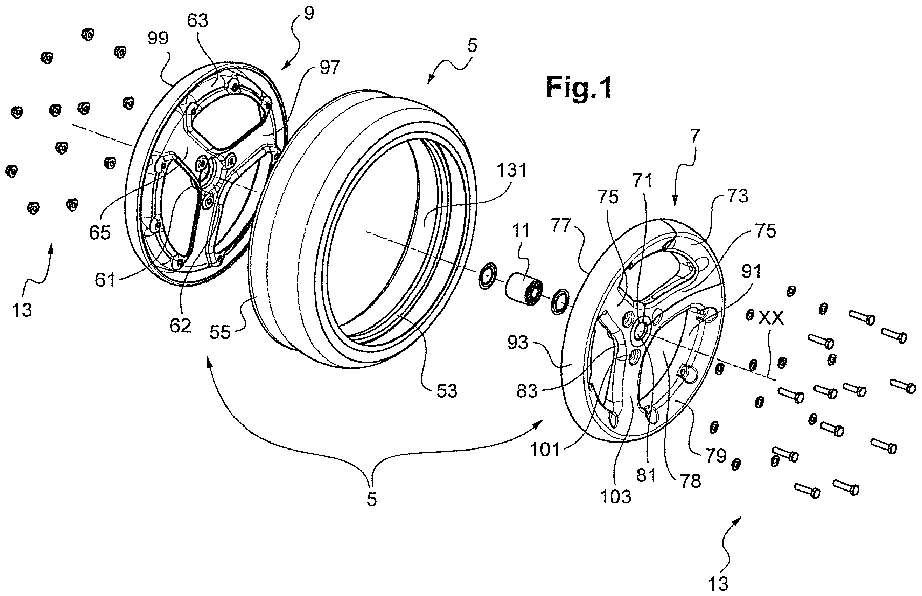

Les figures 1 à 3 montrent un outil de travail en champ sous la forme d'une roue 1. La roue 1 comprend un corps de roue 3 autour duquel est monté un pneumatique 5.

Dans la suite de la description, on désigne par corps de roue ("*body*" ou "*wheel body*" en anglais) la partie pratiquement indéformable de la roue, par opposition à la partie déformable que constitue le pneumatique. On désigne par jante ("*rim*" ou "*wheel rim*" en anglais) la partie située à la périphérie du corps de roue et destinée à supporter le pneumatique. Le reste du corps de roue peut être appelé voile de roue ("*dise*", "*wheel dise*", "*dish*", ou encore "*wheel dish*" en anglais). Autrement dit, le corps de roue est constitué de la jante et du voile de roue. Ici, le terme jante ne saurait désigner l'intégralité du corps de roue, contrairement à l'usage, abusif, que l'on peut en faire communément.

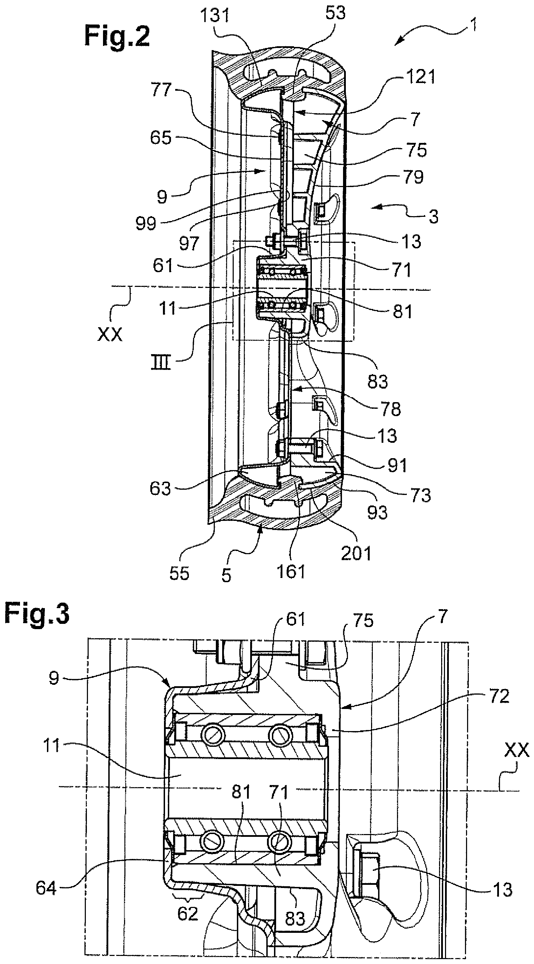

Le corps de roue 3 est formé d'un premier flasque 7 et d'un second flasque 9 généralement circulaires. Le premier flasque 7 et le second flasque 9, représentés de manière séparée sur la figure 1, se montent l'un sur l'autre pour former le corps de roue 3 comme cela est représenté en figures 2 et 3.

Le premier flasque 7 et le second flasque 9 présentent chacun un axe central, ou axe de révolution. Ces axes centraux sont confondus à l'état assemblé et coïncident avec l'axe de rotation de la roue 1 en fonctionnement. Ces axes sont référencés XX sur les figures.

Le premier flasque 7 et le second flasque 9 présentent chacun une face interne, respectivement 77 et 97, et une face externe opposée, respectivement 79 et 99. Lors de l'assemblage du premier flasque 7 et du second flasque 9 l'un sur l'autre, les faces internes 77 et 97 sont mises en regard l'une de l'autre. Les faces externes 79 et 99 sont orientées à l'opposée l'une de l'autre, vers l'extérieur du corps de roue 3.

Le premier flasque 7 et le second flasque 9 sont fixés, ici de manière réversible, l'un à l'autre pour former le corps de roue 3 au moyen de fixations. Dans l'exemple décrit ici, les fixations comprennent des couples vis-écrou 13. Les couples vis-écrou 13 permettent de maintenir ensemble le premier flasque 7 et le second flasque 9. Ici, des couples vis-écrou 13 sont répartis suivant la périphérie du corps de roue tandis que des couples vis-écrou 13 sont répartis au voisinage du centre du corps de roue 3. En remplacement ou en supplément, d'autres moyens de fixation peuvent être utilisés, par exemples, des clips ou des rivets.

Le premier flasque 7 comporte une partie centrale 71, une partie périphérique 73 et au moins un bras 75 reliant la partie centrale 71 à la partie périphérique 73. Ici, le premier flasque 7 comporte trois bras 75.

La partie centrale 71 présente une forme générale de révolution. À l'état assemblé, la partie centrale 71 forme le moyeu de la roue 1. L'espace central de la forme de révolution de la partie centrale 71 est propre à recevoir un essieu ou une fusée destinés à supporter la roue 1 libre en rotation selon l'axe de rotation XX. La roue 1 comprend un palier rotatif logés dans la partie centrale 71, ici sous la forme d'un roulement à billes 11. En variante, le roulement à billes 11 peut être remplacé par d'autres types de roulements, et plus généralement par un palier de type différent, tel qu'un palier lisse par exemple.

La partie centrale 71 présente une surface interne 81, généralement orientée vers l'axe principal XX et formant, ici, un alésage propre à loger le roulement 11. La partie centrale 71 présente une surface externe 83, périphérique, opposée à la surface interne 81.

La partie périphérique 73 est de forme générale annulaire. La partie périphérique 73 est délimitée, selon la direction de l'axe principale XX, par un bord interne et un bord externe. La partie périphérique 73 et la partie centrale 71 sont sensiblement concentriques et centrées sur l'axe principal XX. La partie périphérique 73 entoure la partie centrale 71. Dans l'exemple représenté sur la figure 2, la partie périphérique 73 et la partie centrale 71 sont décalées l'une par rapport à l'autre selon la direction de l'axe principal XX. Du côté de la face interne 77 (à gauche sur la figure 2), la partie centrale 71 fait saillie selon la direction de l'axe principal XX par rapport au bord interne de la partie périphérique 73, sensiblement de la moitié de la longueur de la partie centrale 71. Du côté de la face externe 79 (à droite sur la figure 2), la partie centrale 71 est disposée en retrait par rapport au bord externe de la partie périphérique 73. En variante, la partie périphérique 73 et la partie centrale 71 peuvent être sensiblement coplanaires selon un plan perpendiculaire à l'axe principal XX.

La partie périphérique 73 présente une surface interne 91, ou diamétralement intérieure, généralement orientée vers la partie centrale 71 et une surface externe 93, ou diamétralement extérieure et périphérique, opposée à la surface interne 91. Ici, la surface interne 91 présente une forme générale cylindrique interrompue par les bras 75.

Ici, la surface externe 93 présente une forme générale annulaire, de profil arrondi et bombé vers l'extérieur.

Chaque bras 75 présente une extrémité interne 101 liée à la partie centrale 71 en sa surface externe 83, et une extrémité externe 103, opposée à l'extrémité interne 101 et reliée à la partie périphérique 73 en sa surface interne 91. Chaque bras 75 relie alors la partie centrale 71 et la partie périphérique 73 l'une à l'autre. Les bras 75 s'étendent radialement. Ils forment des rayons de la roue 1.

Ici, l'extrémité interne 101 de chacun des bras 75 est reliée à la surface externe 83 sensiblement sur la moitié de la partie centrale 71 du côté de la face externe 79. Les bras 75 présentent une épaisseur, selon la direction de l'axe principal XX, qui croît de manière régulière depuis la partie centrale 71 jusqu'à l'extrémité externe 103, où elle est maximum et sensiblement égale à l'épaisseur de la partie périphérique 73. Ainsi, l'extrémité externe 103 de chaque bras 75 se confond sensiblement avec la partie périphérique 73 à laquelle elle est reliée. La partie de la face interne 77 du premier flasque 7 définie par les bras 75 est sensiblement plane et alignée avec le bord interne de la partie périphérique 73. Seule la partie centrale 71 en fait saillie. La partie de la face externe 79 du premier flasque 7 définie par les bras 75 est sensiblement concave, en forme de cuvette centrée sur l'axe principale XX.

Des espaces 78 sont définis entre les bras 75 et la surface interne 91 de la partie périphérique 73. La répartition des bras 75 autour de la partie centrale 71 définit autant d'espaces intercalaires 78. Ces espaces 78 sont libres et traversants selon la direction de l'axe principal XX, de la face interne 77 à la face externe 79. En fonctionnement, les espaces 78 facilitent l'évacuation de débris et de boue au travers du premier flasque 7. Les bras 75 et les espaces 78 intercalaires forment conjointement un voile de roue ouvert.

Les bras 75 sont régulièrement répartis de façon angulaire autour de l'axe principal XX. Dans les exemples décrits ici, ils sont au nombre de trois et écartés de 120° les uns des autres. Cette configuration permet d'assurer une résistance mécanique suffisante pour les applications envisagées tout en permettant une économie de matière par rapport à un voile de roue plein. Dans des variantes, le nombre et/ou la répartition des bras 75 peuvent être différents.

Dans les exemples décrits ici, le premier flasque 7 est conformé en une pièce monobloc. Le premier flasque 7 est obtenu, par exemple, par moulage par injection. Le premier flasque 7 est, ici, en matériau plastique, par exemple du polyamide tel que du polyamide 6-6, ou du polypropylène. Le premier flasque 7 en plastique présente des coûts faibles en matière première et en fabrication. Néanmoins, le premier flasque 7 peut également être réalisé en métal. Le premier flasque 7 en métal présente alors une résistance améliorée aux chocs, par exemple en cas de projections de pierres lors du roulage de la machine.

Comme cela apparaît sur les figures 2 à 6, le premier flasque 7 peut prendre la forme d'une enveloppe consolidée par des parois internes de renfort, ou nervures, entre lesquelles de multiples cavités sont laissées vides. Les nervures confèrent au premier flasque 7 une bonne résistance mécanique, comparable à une pièce métallique et/ou une pièce plastique pleine. Elles permettent d'assurer la résistance mécanique nécessaire avec peu de matière première. Le volume occupé par le premier flasque 7 est en grande partie creux.

Le cas échéant, le nombre, la répartition et la forme des nervures peuvent être adaptés en fonction de la résistance mécanique souhaitée pour le premier flasque 7. Des outils de modélisation de type à éléments finis peuvent être utilisés.

La partie centrale 71 loge le roulement 11. Au montage, le roulement 11 est monté coaxialement à l'axe principal XX du corps de roue 3. Le roulement 11 est maintenu dans cette position grâce au logement de sorte que l'axe principal XX du corps de roue 3 coïncide avec l'axe de rotation de la roue 1 en utilisation.

En particulier, la surface intérieure 81 de la partie centrale 71 définit en partie le logement et prend la forme d'un alésage cylindrique dont le diamètre correspond à celui de la forme cylindrique extérieure du roulement 11.

La longueur de la surface intérieure 81, selon la direction de l'axe principal XX, est choisie suffisante pour assurer un centrage long. Par exemple, la longueur de la surface intérieure 81 est supérieure à la moitié de la longueur du roulement 11. L'ajout d'une autre pièce pour assurer le centrage est superflu. Ici, la longueur du logement est sensiblement égale à la longueur de la bague extérieure du roulement 11.

Dans l'exemple de la figure 3, la partie centrale 71 du premier flasque 7 est configurée de manière à permettre un mouvement de translation du roulement 11 selon l'axe principal XX, en l'absence du second flasque 9. Ainsi, le roulement 11 peut être inséré dans son logement, et extrait de celui-ci, facilement.

La partie centrale 71 comprend, en outre, une butée axiale 72 configurée de manière à limiter le mouvement de translation du roulement 11. La butée axiale 72 est, ici, formée du côté de la face externe 79 du premier flasque 7. Par conséquent, l'insertion et l'extraction du roulement 11 peuvent être faites du côté opposé. La butée axiale 72 permet de régler le positionnement du roulement 11 par rapport au premier flasque 7. La butée axiale 72 peut être vue comme un fond du logement.

Le fond est ici ajusté pour être en contact avec l'extrémité de la bague extérieure du roulement 11 tout en laissant libre un passage central. Ainsi, un essieu peut dépasser du côté externe du premier flasque 7 (à droite sur les figures 2 et 3).

La bague interne du roulement 11 est plus longue que la bague externe et dépasse dans l'ouverture du fond du logement (à droite sur la figure 3). La bague externe dépasse également de l'extrémité opposée du logement (à gauche sur la figure 3). Ainsi, la pénétration de polluants divers qui pourraient détériorer le roulement 11, tels que de la poussière ou de la terre, est empêchée.

Le second flasque 9 est homologue du premier flasque 7. Le second flasque 9 comprend une partie centrale 61, une partie périphérique 63 et des bras 65. Pour ne pas encombrer les figures, les surfaces du second flasque 9 homologues des surfaces 81, 83, 91, 93 du premier flasque 7 ne sont pas référencées. Les espaces du second flasque 9 homologues des espaces 78 du premier flasque 7 ne sont pas référencés. Le second flasque 9 fonctionne de manière analogue au premier flasque 7, aux exceptions près décrites dans la suite.

La partie centrale 61 du second flasque 9 diffère de la partie centrale 71 du premier flasque 7 en ce qu'elle ne forme pas moyeu à l'état assemblé des deux flasques 7,9. L'espace central de la partie centrale 61 du second flasque 9 est propre à recevoir le moyeu formé par la partie centrale 71 du premier flasque 7.

Dans les exemples représentés ici, la partie centrale 61 du second flasque 9 comprend une bague 62. La bague 62 relie l'extrémité interne de chacun des bras 65 du second flasque 9 les unes avec les autres. Au cours du montage du premier flasque 7 et du second flasque 9 l'un sur l'autre, la bague 62 s'ajuste autour du moyeu formé par la partie centrale 71 du premier flasque 7. La bague 62 est optionnelle mais permet d'améliorer le centrage mutuel du premier flasque 7 et du second flasque 9. La bague 62 renforce de manière générale la tenue du corps de roue 3. La bague 62, en entourant et en couvrant au moins partiellement le moyeu, le protège de l'environnement. Par exemple, la bague 62 protège le moyeu et le palier 11 qui y est logé des chocs dus aux projections de cailloux en fonctionnement. La bague 62 protège également des contraintes et frottements qui peuvent résulter de l'accumulation de terre séchée à proximité des parties en mouvement de la roue 1. Cette protection est particulièrement efficace lorsque la bague 62 est en métal. En variante, la bague 62 peut être absente et les extrémités internes de chacun des bras 65 venir en appui autour de la partie centrale 71 du premier flasque 7, indépendamment les uns des autres.

Dans l'exemple représenté sur la figure 3, la partie périphérique 63 du second flasque 9 prend la forme d'un anneau de section creuse et généralement triangulaire. L'un des côtés de la forme en triangle porte la surface externe homologue de la surface externe 93 de la partie périphérique 73 du premier flasque 7. La surface externe présente une forme générale circulaire, de profil arrondi et bombé vers l'extérieur.

Dans l'exemple représenté sur la figure 3, les bras 65 sont de forme sensiblement plate selon la direction de l'axe principal XX. Les bras 65 du second flasque 9 et les bras 75 du premier flasque 7 sont sensiblement alignés deux à deux selon la direction de l'axe principal XX par un indexage en rotation des deux flasques 7, 9 l'un par rapport à l'autre. Les espaces 78 du premier flasque 7 et les espaces homologues du second flasque 9 sont alignés deux à deux et restent traversants après assemblage des deux flasques 7, 9. Le corps de roue 3 présente un voile de roue ouvert.

Dans les exemples décrits ici, le second flasque 9 est formé d'une pièce monobloc. Le second flasque 9 est obtenu par estampage à partir d'une tôle métallique. Notamment, la partie périphérique 63 est obtenue par un pliage sur elle-même de la portion périphérique de la tôle, ce qui confère à la partie périphérique 63 une forme de collerette ou de rebord périphérique. En variante, le second flasque 9 peut être obtenu par moulage ou par emboutissage. Le second flasque 9 est, ici, en métal, par exemple de l'acier. En variante, de l'aluminium peut être utilisé. Le second flasque 9 présente une résistance mécanique élevée. Néanmoins, le second flasque 9 peut également être réalisé en un matériau plastique, par exemple similaire à celui du premier flasque 7.

Le premier flasque 7 en plastique présente un faible coût de fabrication tandis que le second flasque 9 en métal confère au corps de roue 3 la résistance mécanique nécessaire au travail en champs. Néanmoins, les deux flasques 7, 9 peuvent être réalisés tout deux en métal, par exemple lorsque les contraintes mécaniques prévues sont sévères, ou tout deux en plastique, par exemple lorsque les contraintes mécaniques prévues sont modestes. La configuration générale du corps de roue 3 formé par le premier flasque 7 et le second flasque 9 permet d'adapter le comportement mécanique du corps de roue 3 en adaptant les matériaux utilisés sans altérer la configuration générale du corps de roue 3. En variante, le premier flasque 7 et/ou le second flasque 9 peuvent être réalisés par assemblage de plusieurs pièces plutôt que par une pièce monobloc. Par exemple, la partie périphérique 73 et/ou la partie périphérique 63 peuvent être formées de plusieurs sections d'anneau.

Dans le mode de réalisation des figures 1 à 3, la partie centrale 61 du second flasque 9 comprend une portion de couvercle 64. La portion de couvercle 64 est formée, ici, d'un prolongement de la bague 62 vers la face externe 99 du second flasque 9 replié sensiblement selon une direction radiale vers l'axe principal XX. La portion de couvercle 64 vient couvrir l'extrémité de la partie centrale 71 du premier flasque 7. La portion de couvercle 64 forme saillie radiale vers le centre par rapport à la surface intérieure 81 définissant le logement pour le roulement 11. Autrement dit, la portion de couvercle 64 vient partiellement fermer le logement pour le roulement 11. La portion de couvercle 64 de la partie centrale 61 du second flasque 9 forme alors butée axiale limitant le mouvement de translation du roulement 11 dans son logement. L'assemblage des deux flasques 7, 9 enferme le roulement 11 dans son logement. La portion de couvercle 64 est, ici, ajustée pour être en contact avec la bague extérieure du roulement 11 tout en laissant libre un passage central. Ainsi, un essieu peut dépasser du côté externe du second flasque 9 (à gauche sur les figures 2 et 3).

La portion de couvercle 64 assure également une protection du moyeu comme décrit ci-avant à propos de la bague 62. La portion de couvercle 64 forme bouclier de protection pour le moyeu. En couvrant au moins partiellement le moyeu, la portion de couvercle 64 protège le moyeu de l'environnement. Par exemple, la portion de couvercle 64 protège le moyeu et le rouleau 11 qui y est logé des chocs dus aux projections de cailloux en fonctionnement. La portion de couvercle 64 protège également des contraintes et frottements qui peuvent résulter de l'accumulation de terre séchée à proximité des parties en mouvement de la roue 1.

Le second flasque 9 ne maintient pas radialement le roulement 11 et ne participe donc pas à son centrage. Le second flasque 9 participe seulement, optionnellement, à son blocage axial. En fonctionnement, le second flasque 9 ne coopère pas directement avec l'essieu. Les forces subies par la partie périphérique 63 du second flasque 9 sont transmises à la partie centrale 71 du premier flasque 7 via les bras 65 du second flasque 9.

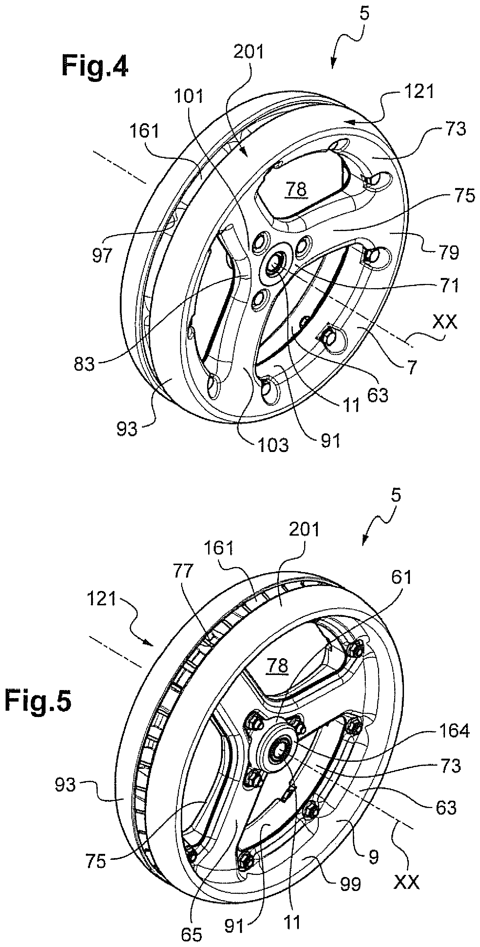

Le mode de réalisation des figures 4 et 5 est similaire à celui des figures 1 à 3. Les parties fonctionnellement identiques y portent les mêmes références numériques. La portion de couvercle 64 du second flasque 9 y est absente. La roue 1 comprend une pièce rapportée 164, ou coupelle. La pièce rapportée 164 est conformée de manière à être fixée au corps de roue 3 en enfermant le roulement 11 logé dans la partie centrale 71 du premier flasque 7. La pièce rapportée 164 fonctionne de manière similaire à la portion de couvercle 64 du mode de réalisation des figures 1 à 3. Dans le mode de réalisation des figures 4 et 5, le roulement 11 peut être extrait de son logement, par exemple pour être remplacé en maintenance, sans qu'il soit nécessaire de désassembler les deux flasques 7, 9. Le démontage de la pièce rapportée 164 suffit à ouvrir le logement et à libérer le roulement 11.

La pièce rapportée 164 peut être réalisée par déformation d'une tôle. En fonctionnement, la pièce rapportée 164 assure le maintient axial du roulement 11 et est soumise à des forces modérées. La pièce rapportée 164 peut être réalisée en un matériau moins noble et moins coûteux que les flasque 7, 9, par exemple de la tôle.

Dans des variantes, le moyeu formé par la partie centrale 71 du premier flasque 7 comprend en son centre un alésage traversant selon l'axe principal XX comprenant au moins deux portions sensiblement cylindriques de diamètres différents reliées par un épaulement annulaire. Le palier 11 présente alors une forme extérieure adaptée de sorte que l'épaulement annulaire forme butée axiale pour le palier 11.

Une fois les deux flasques 7, 9 mutuellement assemblés, le corps de roue 3 présente une jante 121 formée conjointement par la partie périphérique 73 du premier flasque 7 et la partie périphérique 63 homologue du second flasque 9. La jante 121 présente alors une surface externe formée conjointement par la surface externe 93 de la partie périphérique 73 du premier flasque 7 et par la surface externe homologue du second flasque 9. Cette surface externe de jante forme un siège 201 de corps de roue 3. Le siège 201 accueille le pneumatique 5.

Une fois le pneumatique 5 enfilé sur la jante 121, le premier flasque 7 et le second flasque 9 supportent le pneumatique 5, ici chacun sensiblement pour moitié. L'aire de la surface externe 93 du premier flasque 7 couverte par le pneumatique 5 est sensiblement équivalente à l'aire de la surface externe homologue du second flasque 9 couverte par le pneumatique 5. Le premier flasque 7, le second flasque 9 et le pneumatique 5 sont mutuellement configurés de sorte que la force radiale appliquée par le pneumatique 5 encerclant le corps de roue 3 se répartie sensiblement de manière équivalente sur les deux flasques 7, 9. Aucun du premier flasque 7 et du second flasque 9 n'a pour fonction unique le blocage du pneumatique 5 selon la direction de l'axe principal XX. En variante, la répartition des forces peut être déséquilibrée, par exemple jusqu'à un rapport de 4 pour 1.

Le pneumatique 5 comprend une semelle 131 en appui sur le siège 201 de la jante 121. Les configurations de la semelle 131 d'une part, et du siège 201 d'autre part, sont choisies concordantes, sensiblement en correspondance de forme. Le pneumatique 5 est maintenu autour du corps de roue 3. Le risque de déjantage accidentel est faible, même en conditions difficiles.

Dans les exemples décrits ici, le pneumatique 5 est un pneumatique du type semi-creux. Le pneumatique 5 est du type non gonflable. L'espace intérieur entre la semelle 131 et la bande de roulement est en communication fluidique avec l'extérieur, par une ouverture non représentée. Ceci permet une plus grande déformation du pneumatique 5 en fonctionnement, facilitant ainsi le décollage de la boue.

Dans les modes de réalisations représentés sur les figures, le siège 201 présente un diamètre qui varie le long de la direction de l'axe principal XX. Le siège 201 présente une forme non strictement cylindrique. Au voisinage de l'interface entre le premier flasque 7 et le second flasque 9, c'est-à-dire au voisinage des faces internes 77, 97, le diamètre du siège 201 est sensiblement différent du diamètre du siège 201 au voisinage des faces opposées, c'est-à-dire les faces externes 79, 99. Ceci est visible sur la figure 2 en coupe. Des portions du siège 201 s'opposent ainsi au déplacement axial du pneumatique 5. Le risque de déjantage accidentel est particulièrement faible. L'ajout d'une pièce spécifique formant joue de blocage est superflu.

Sur les modes de réalisation des figures, au voisinage de l'interface entre le premier flasque 7 et le second flasque 9, le diamètre du siège 201 est supérieur au diamètre du siège 201 au voisinage des faces opposées des flasques 7, 9, à l'exception d'une rainure 161. Le siège 201 présente alors une forme générale convexe. Cette configuration permet, par exemple, l'utilisation de pneumatiques dont la semelle 131 est concave et coiffe un siège 201 convexe en l'entourant partiellement. De tels pneumatiques sont par exemple décrits dans FR 2 933 903.

En variante, au voisinage de l'interface entre le premier flasque 7 et le second flasque 9, le diamètre du siège 201 est inférieur au diamètre du siège 201 au voisinage des faces opposées. Le siège 201 présente alors une forme générale concave. Le siège 201 présente des surfaces s'opposant au déplacement axial du pneumatique 5.

Dans les exemples de réalisation des figures, la partie périphérique 73 du premier flasque 7 et la partie périphérique 63 du second flasque 9 sont mutuellement conformées de sorte que leur assemblage définisse la rainure 161. La rainure 161 s'étend sensiblement sur la circonférence du corps de roue 3, à l'interface de la partie périphérique 73 du premier flasque 7 et de la partie périphérique 63 du second flasque 9. La rainure 161 est propre à loger un talon 53 correspondant du pneumatique 5. Le maintien du pneumatique 5 autour du corps de roue 3 est encore amélioré.

Dans chacun des modes de réalisation représentés sur les figures, le corps de roue 3 est asymétrique. En particulier, le moyeu formé par la partie centrale 71 du premier flasque 7 est décalé par rapport au milieu du corps de roue 3 selon l'axe principal XX. Le moyeu du premier flasque 7 dépasse au moins en partie dans l'espace intérieur défini par la forme annulaire de la partie périphérique 63 du second flasque 9. Cette caractéristique est optionnelle mais permet un meilleur équilibrage de l'outil 1 une fois installé sur le reste de la machine.

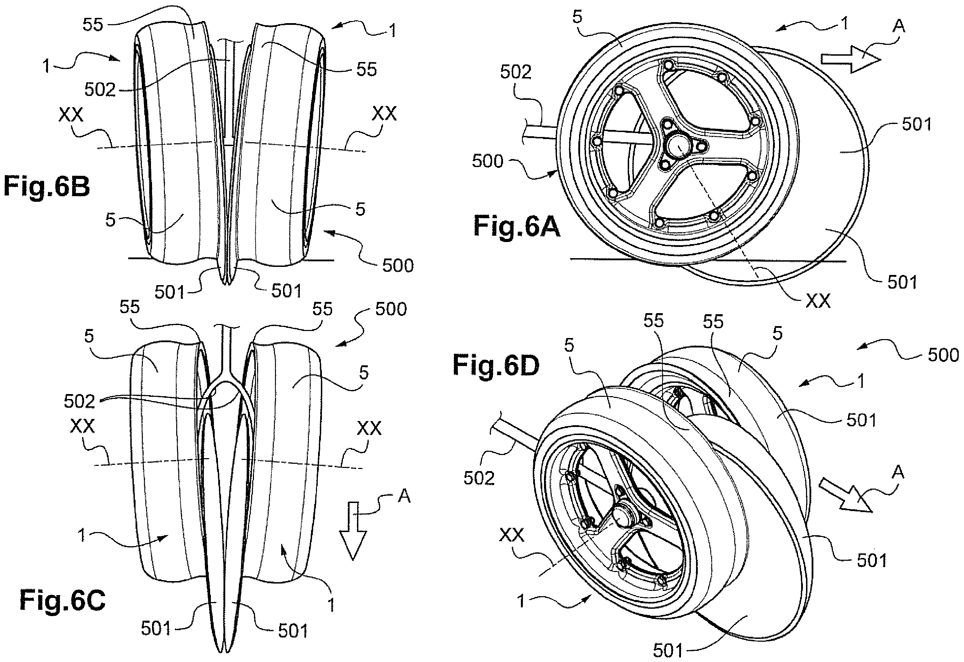

Le pneumatique 5 tel que représenté en figure 2 présente un profil asymétrique. La semelle 131 et le siège 201 présentent chacun un plan de symétrie perpendiculaire à l'axe principal XX. La partie du pneumatique 5 opposée à la semelle 131, la bande de roulement, est asymétrique. La bande de roulement présente une lèvre 55. La lèvre 55 fait saillie depuis le pneumatique 5, sensiblement selon la direction de l'axe principal XX, vers l'extérieur, du côté de la face externe 99 du second flasque 9. La lèvre 55 s'étend sensiblement le long de la circonférence du pneumatique 5. Une telle roue 1 pourvue d'un pneumatique 5 à lèvre 55 est prévue pour être installée sur une machine telle que représentée schématiquement sur les figures 6A à 6D.

Les figures 6A à 6D représentent partiellement un semoir 500 dans lequel des outils 1 similaires à celui des figures 1 à 5 coopèrent chacun avec un disque 501. L'outil 1 forme alors une roue de jauge. L'outil 1 est libre en rotation mais solidaire du disque 501 selon une direction sensiblement verticale. Ainsi, même en présence de dénivelés dans un champ, le disque 501 travaille à une profondeur sensiblement constante par rapport à la surface du sol. En outre, les axes respectifs de l'outil 1 et du disque 501 sont décalés l'un par rapport à l'autre. Au cours de l'avancé du semoir 500, la lèvre 55 de l'outil 1 racle contre l'une des faces du disque 501, le nettoyant ainsi de la boue et des débris qui pourraient s'y être fixés. Dans cet exemple d'application de l'outil 1, une des deux faces de l'outil 1 est inaccessible en fonctionnement : le coté de l'outil 1 correspondant à la face externe 99 du second flasque 9 est peu accessible à cause de la présence du disque 501.

Sur la figure 2, la lèvre 55 du pneumatique 5 est située du côté du second flasque 9. Dans cette configuration, un espace libre important est ménagé à l'intérieur de la roue 1 du côté de la lèvre 55. L'espace libre permet notamment de loger, en partie dans l'espace intérieur défini par le pneumatique 5, un bras 502 d'un bâti de machine agricole supportant un essieu disposé sensiblement selon l'axe principal XX. Les figures 6A à 6D montrent un exemple d'un tel montage. Dans cet exemple, le bras 502 du bâti doit pouvoir s'étendre entre l'axe principal XX au voisinage du roulement 11 et la périphérie de la roue 1. Le bras 502 du bâti doit en outre ne pas gêner le fonctionnement du disque 501 disposé au contact d'une partie de la lèvre 55 et obturant en partie une face de la roue 1. Dans des variantes, la lèvre 55 peut être disposée du même côté de la roue 1 que le premier flasque 7, face au disque 501.

Comme cela apparaît sur la vue de face de la figure 6B, c'est-à-dire orientée vers l'arrière selon le sens d'avancement du semoir 500, le semoir 500 présente une configuration dite "en V". Deux disques 501 coopèrent pour creuser un sillon dans la terre. Les deux disques 501 sont le symétrique l'un de l'autre par rapport à un plan vertical s'étendant selon la direction d'avancée représentée par la flèche A. Les disques 501 ne sont pas disposés à la verticale mais au contraire orientés en partie vers le sol. Ils forment par exemple un angle d'environ 5° avec la verticale. Une roue 1 coopère avec chacun des disques 501. Les deux roues 1 présentent une orientation similaire à celle des disques 501, bien que la valeur de l'angle puisse être différente.

Comme cela apparaît sur la vue de dessus de la figure 6C, le semoir 500 présente, en outre, une configuration "en V" selon une autre orientation dans l'espace. Les deux disques 501 forment aussi un angle avec la direction d'avancée du semoir 500. L'angle vaut ici, environ 5° également. Les roues 1 présentent une orientation similaire à celle des disques 501, bien que la valeur de l'angle puisse être différente.

À cause de ces orientations particulières, les efforts subis par les roues 1 et dus à la résistance du terrain et aux frottements sont élevés. Ils sont supérieurs à ceux que subirait une roue 1 identique dont l'axe de rotation XX serait sensiblement perpendiculaire à la direction d'avancée et/ou horizontal.

Les contraintes tendent à se concentrer au niveau du moyeu et de la liaison avec l'essieu. Les améliorations apportées par l'invention présentent donc un intérêt spécifique pour les outils agricoles présentant une configuration similaire.

Dans les roues classiques, le palier est placé à cheval dans un alésage en deux parties ménagées dans des flasques respectifs. Le centrage du palier est délicat à cause des défauts d'alignement des deux flasques. Au montage et en fonctionnement, cet alignement tend à être faussé par tout déplacement des deux demi-logements l'un par rapport à l'autre, déplacements causés par exemple par des contraintes et des chocs.

Grâce au caractère monobloc du logement dans l'outil selon l'invention, le centrage du palier est insensible aux déplacements relatifs éventuels entre les deux flasques. L'alésage du logement conserve sa forme intérieure quelque soit le jeu entre les deux flasques. Un tel outil présente une robustesse améliorée tout en présentant une démontabilité aisée, une masse et un coût raisonnables.

Les tolérances de fabrication et de montage peuvent être augmentées, en particulier en ce qui concerne l'assemblage des deux flasques l'un avec l'autre.

L'invention ne se limite pas aux exemples d'outils décrits ci-avant, seulement à titre d'exemple, mais elle englobe toutes les variantes que pourra envisager l'homme de l'art dans le cadre des revendications ci-après.

## Revendications

1. Outil (1) de travail en champs du type comprenant un premier flasque (7) et un second flasque (9) qui se montent l'un sur l'autre en formant un corps de roue (3),
le premier flasque (7) comporte une partie centrale (71) avec un logement pour un palier (11) prenant la forme d'un alésage cylindrique dont le diamètre correspond à celui de la forme cylindrique extérieure du palier (11) et une partie périphérique (73) de forme générale annulaire, la partie centrale (71) du premier flasque (7) étant configurée de manière à y maintenir le palier (11) orienté coaxialement avec un axe principal (XX) du corps de roue (3),
le second flasque (9) est homologue du premier flasque (7), le second flasque (9) comporte une partie centrale (61) et une partie périphérique (63),
à l'état monté, le corps de roue (3) présente une jante (121) formée conjointement par la partie périphérique (73) du premier flasque (7) et la partie périphérique homologue (63) du second flasque (9) et un moyeu,
**caractérisé en ce que** le premier flasque (7) et le second flasque (9) comportent chacun des bras (75, 65) reliant respectivement leur partie centrale (71, 61) et leur partie périphérique (73, 63) l'une à l'autre, et **en ce que** le moyeu est formé par la partie centrale (71) du premier flasque (7), tandis que la partie centrale (61) du second flasque (9) reçoit la partie centrale (71) du premier flasque (7) formant le moyeu.

2. Outil (1) selon l'une des revendications précédentes, dans lequel la partie centrale (71) du premier flasque (7) est configurée de manière à permettre un mouvement de translation selon un axe principal (XX) du corps de roue (3) d'un palier (11) logé dans la partie centrale (71) du premier flasque (7).

3. Outil (1) selon l'une des revendications précédentes, dans lequel la partie centrale (71) du premier flasque (7) comprend une butée axiale (72) configurée de manière à limiter un mouvement de translation selon un axe principal (XX) du corps de roue (3) d'un palier (11) logé dans la partie centrale (71) du premier flasque (7).

4. Outil (1) selon l'une des revendications précédentes, dans lequel la partie centrale (61) du second flasque (9) forme butée axiale (64) limitant un mouvement de translation selon un axe principal (XX) du corps de roue (3) d'un palier (11) logé dans la partie centrale (71) du premier flasque (7).

5. Outil (1) selon l'une des revendications précédentes, comprenant en outre une pièce rapportée (164) conformée de manière à être fixée au corps de roue (3) en enfermant un palier (11) logé dans la partie centrale (71) du premier flasque (7).

6. Outil (1) selon l'une des revendications précédentes, dans lequel la partie centrale (61) du second flasque (9) comprend une bague (62) reliant les unes avec les autres une extrémité de chacun des bras (65) du second flasque (9), la bague (62) s'ajustant autour du moyeu formé par la partie centrale (71) du premier flasque (7) au cours du montage du premier flasque (7) et du second flasque (9) l'un sur l'autre.

7. Outil (1) selon l'une des revendications précédentes, dans lequel le premier flasque (7) et le second flasque (9) sont faits de deux matériaux différents.

8. Outil (1) selon l'une des revendications précédentes, dans lequel le premier flasque (7) est en un matériau plastique.

9. Outil (1) selon l'une des revendications précédentes, dans lequel le second flasque (9) est en métal.

10. Outil (1) selon l'une des revendications précédentes, dans lequel le moyeu comprend en son centre un alésage traversant selon un axe principal (XX) du corps de roue (3), l'alésage comprenant au moins deux portions sensiblement cylindriques de diamètres différents reliées par un épaulement annulaire.

## Patentansprüche

1. Feldarbeitswerkzeug (1) von dem Typ, der einen ersten Flansch (7) und einen zweiten Flansch (9) umfasst, die unter Bildung eines Radkörpers (3) aneinandergebaut werden können,
der erste Flansch (7) einen Mittelteil (71) mit einer Aufnahme für ein Lager (11), das die Form einer zylindrischen Bohrung annimmt, deren Durchmesser dem der zylindrischen Außenform des Lagers (11) entspricht, und einen Umfangsteil (73) von allgemein ringförmiger Form umfasst, wobei der Mittelteil (71) des ersten Flansches (7) so gestaltet ist, dass er das Lager (11) darin koaxial mit einer Hauptachse (XX) des Radkörpers (3) ausgerichtet hält,
der zweite Flansch (9) zum ersten Flansch (7) gleichartig ist, der zweite Flansch (9) einen Mittelteil (61) und einen Umfangsteil (63) umfasst,
der Radkörper (3) im zusammengebauten Zustand eine Felge (121), die gemeinsam vom Umfangsteil (73) des ersten Flansches (7) und dem gleichartigen Umfangsteil (63) des zweiten Flansches (9) gebildet wird, und eine Nabe aufweist,
**dadurch gekennzeichnet, dass** der erste Flansch (7) und der zweite Flansch (9) je Arme (75, 65) umfassen, die jeweils ihren Mittelteil (71, 61) und ihren Umfangsteil (73, 63) miteinander verbinden, und dadurch, dass die Nabe vom Mittelteil (71) des ersten Flansches (7) gebildet wird, während der Mittelteil (61) des zweiten Flansches (9) den Mittelteil (71) des ersten Flansches (7), der die Nabe bildet, aufnimmt.

2. Werkzeug (1) nach einem der vorstehenden Ansprüche, wobei der Mittelteil (71) des ersten Flansches (7) so gestaltet ist, dass er eine Verschiebebewegung eines Lagers (11), das im Mittelteil (71) des ersten Flansches (7) untergebracht ist, entlang einer Hauptachse (XX) des Radkörpers (3) ermöglicht.

3. Werkzeug (1) nach einem der vorstehenden Ansprüche, wobei der Mittelteil (71) des ersten Flansches (7) einen axialen Anschlag (72) umfasst, der so gestaltet ist, dass er eine Verschiebebewegung eines Lagers (11), das im Mittelteil (71) des ersten Flansches (7) untergebracht ist, entlang einer Hauptachse (XX) des Radkörpers (3) begrenzt.

4. Werkzeug (1) nach einem der vorstehenden Ansprüche, wobei der Mittelteil (61) des zweiten Flansches (9) einen axialen Anschlag (64) bildet, der eine Verschiebebewegung eines Lagers (11), das im Mittelteil (71) des ersten Flansches (7) untergebracht ist, entlang einer Hauptachse (XX) des Radkörpers (3) begrenzt.

5. Werkzeug (1) nach einem der vorstehenden Ansprüche, das weiter ein Einsatzstück (164) umfasst, das so ausgebildet ist, dass es unter Umschließen eines Lagers (11), das im Mittelteil (71) des ersten Flansches (7) untergebracht ist, am Radkörper (3) befestigt werden kann.

6. Werkzeug (1) nach einem der vorstehenden Ansprüche, wobei der Mittelteil (61) des zweiten Flansches (9) eine Buchse (62) umfasst, die ein Ende von jedem der Arme (65) des zweiten Flansches (9) miteinander verbindet, wobei sich die Buchse (62) beim Aneinanderbauen des ersten Flansches (7) und des zweiten Flansches (9) um die vom Mittelteil (71) des ersten Flansches (7) gebildete Nabe passt.

7. Werkzeug (1) nach einem der vorstehenden Ansprüche, wobei der erste Flansch (7) und der zweite Flansch (9) aus zwei unterschiedlichen Materialien gefertigt sind.

8. Werkzeug (1) nach einem der vorstehenden Ansprüche, wobei der erste Flansch (7) aus einem Kunststoffmaterial ist.

9. Werkzeug (1) nach einem der vorstehenden Ansprüche, wobei der zweite Flansch (9) aus Metall ist.

10. Werkzeug (1) nach einem der vorstehenden Ansprüche, wobei die Nabe in ihrer Mitte eine Durchgangsbohrung entlang einer Hauptachse (XX) des Radkörpers (3) umfasst, wobei die Bohrung mindestens zwei im Wesentlichen zylindrische Abschnitte von unterschiedlichen Durchmessern umfasst, die über eine ringförmige Schulter verbunden sind.

## Claims

1. Tool (1) for working in fields, of the type comprising a first flange (7) and a second flange (9) which mount one on the other, forming a wheel body (3), the first flange (7) has a central portion (71) with a housing for a bearing (11) taking the form of a cylindrical bore the diameter of which corresponds to that of the outer cylindrical shape of the bearing (11), and a generally annular peripheral portion (73), the central portion (71) of the first flange (7) being configured so as to retain therein the bearing (11) orientated coaxially with a main axis (XX) of the wheel body (3),
the second flange (9) is homologous to the first flange (7), le second flange (9) has a central portion (61) and a peripheral portion (63),
in the assembled state, the wheel body (3) has a rim (121) which is formed together by the peripheral portion (73) of the first flange (7) and the homologous peripheral portion (63) of the second flange (9) and a hub,
**characterized in that** the first flange (7) and the second flange (9) each have arms (75, 65) connecting respectively their central portion (71, 61) and their peripheral portion (73, 63) to each other, and **in that** the hub is formed by the central portion (71) of the first flange (7), while the central portion (61) of the second flange (9) receives the central portion (71) of the first flange (7) forming the hub.

2. Tool (1) according to any of the preceding claims, wherein the central portion (71) of the first flange (7) is configured so as to allow a translation movement along a main axis (XX) of the wheel body (3) of a bearing (11) which is received in the central portion (71) of the first flange (7).

3. Tool (1) according to any one of the preceding claims, wherein the central portion (71) of the first flange (7) comprises an axial stop (72) which is configured so as to limit a translation movement in accordance with a main axis (XX) of the wheel body (3) of a bearing (11) which is received in the central portion (71) of the first flange (7).

4. Tool (1) according to any one of the preceding claims, wherein the central portion (61) of the second flange (9) forms an axial stop (64) limiting a translation movement in accordance with a main axis (XX) of the wheel body (3) of a bearing (11) received in the central portion (71) of the first flange (7).

5. Tool (1) according to any one of the preceding claims, further comprising an insert (164) which is formed so as to be fixed to the wheel body (3), enclosing a bearing (11) which is received in the central portion (71) of the first flange (7).

6. Tool (1) according to any one of the preceding claims, wherein the central portion (61) of the second flange (9) comprises a ring (62) which connects an end of each of the arms (65) of the second flange (9) to each other, the ring (62) fitting around the hub formed by the central portion (71) of the first flange (7) during the mounting of the first flange (7) and the second flange (9) one on the other.

7. Tool (1) according to any one of the preceding claims, wherein the first flange (7) and the second flange (9) are made of two different materials.

8. Tool (1) according to any one of the preceding claims, wherein the first flange (7) is made of a plastics material.

9. Tool (1) according to any one of the preceding claims, wherein the second flange (9) is made of metal.

10. Tool (1) according to any one of the preceding claims, wherein the hub comprises at the centre thereof a through bore in accordance with a main axis (XX) of the wheel body (3), the bore comprising at least two substantially cylindrical portions which have different diameters and which are connected by an annular shoulder.
